# EUROPEAN PATENT APPLICATION

(11) **EP 4 489 283 A1**
(43) Date of publication of application: **08.01.2025**
(21) Application number: 23777568.9
(22) Date of filing: 05.01.2023
(51) Int. Cl.: H02M 1/42

(54) **POWER CONTROL CIRCUIT AND CONTROL METHOD THEREFOR**

(30) Priority: 02.04.2022 CN 202210342890
(71) Applicant: Huawei Digital Power Technologies Co., Ltd., Shenzhen, Guangdong 518043 (CN)
(72) Inventor: HU, Xiaolu, Shenzhen, Guangdong 518043 (CN); YANG, Zezhou, Shenzhen, Guangdong 518043 (CN); YI, Liqiong, Shenzhen, Guangdong 518043 (CN); CHEN, Shaoxian, Shenzhen, Guangdong 518043 (CN)
(74) Representative: Gill Jennings & Every LLP
(86) International application number: PCT/CN2023/070609
(87) International publication number: WO 2023/185189

(57) **Abstract**

Embodiments of this application provide a power control circuit and a control method thereof, applied to the energy field. The power control circuit includes an alternating current power supply module, a power module, and a control module. The power module includes a bridgeless power factor correction circuit. A sampling module in the alternating current power supply module samples a current signal output by an alternating current power supply or the power module, and outputs an obtained sampled signal to the control module. The control module controls on and off of a switch element in the alternating current power supply module based on the received sampled signal, and the control module switches off the switch element when the sampled signal includes a lightning surge signal, to avoid damage to the switch element. In addition, the control module is further configured to perform current metering on the sampled signal, so that the power control circuit including the bridgeless power factor correction circuit achieves a plurality of functions including switch control, lightning protection, and current metering simultaneously.

## Description

This application claims priority to Chinese Patent Application No. 202210342890.9, filed with the China National Intellectual Property Administration on April 02, 2022 and entitled "POWER CONTROL CIRCUIT AND CONTROL METHOD THEREOF", which is incorporated herein by reference in its entirety.

### TECHNICAL FIELD

Embodiments of this application relate to the field of electronic circuits, and in particular, to a power control circuit and a control method thereof.

### BACKGROUND

An increasingly mature design of a bridgeless power factor correction (Power Factor Correction, PFC) circuit brings an increasingly extensive application market of the bridgeless PFC circuit. The bridgeless PFC circuit may include a single-way bridgeless PFC circuit or a multi-way bridgeless PFC circuit, and a PFC circuit of each way includes a passive component such as an inductive element. Currently, each of a lightning quick-break protection function, a low frequency switch control function, and a current metering function of a conventional bridgeless PFC circuit needs to be implemented by cooperating with a corresponding sampling circuit and control circuit, that is, the conventional invalid PFC circuit needs a plurality of sets of sampling and control circuits to achieve a plurality of functions synchronously. Correspondingly, the plurality of sets of circuits need a plurality of sets of components. As a result, a large area of a printed circuit board (Printed Circuit Board, PCB) is occupied.

### SUMMARY

Embodiments of this application provide a power control circuit and a control method thereof. In this method, the power control circuit can implement lightning quick-break protection, low frequency switch control and current metering, and reduce an occupied area of the circuit.

According to a first aspect, an embodiment of this application provides a power control circuit. The power control circuit includes an alternating current power supply module, a power module, and a control module. The alternating current power supply module includes but is not limited to an alternating current power supply, a sampling module, and a switch element. The alternating current power supply may be configured to provide electric energy for the power module. The sampling module is configured to sample a current signal output by the alternating current power supply to the sampling module, or sample a current signal output by the power module to the sampling module, to obtain a sampled signal. The sampling module outputs the obtained sampled signal to the control module. The power module in the power control circuit includes a bridgeless power factor correction PFC circuit. The control module in the power control circuit is configured to: receive the sampled signal output by the sampling module, and control, based on the received sampled signal, on and off of the switch element in the power supply module. When the sampled signal includes a lightning surge signal, the control module is further configured to switch off the switch element. In addition, the control module is further configured to perform current metering on the sampled signal. In this way, in this application, a sampling circuit, that is, the sampling circuit that includes the sampling module and the control module, can implement lightning protection of the switch element, control the on and off of the switch element, and measure a current in the power control circuit, to reduce an occupied area of the power control circuit. This improves utilization of a PCB board to further increase costs.

For example, the control module is connected to a gate of the switch element, to control on and off of the switch element.

For example, the bridgeless PFC circuit is a single-way bridgeless PFC circuit or a multi-way bridgeless PFC circuit.

For example, a PCF circuit of each way of the multi-way bridgeless PFC circuit includes an inductive element, a pair of switch elements, and a capacitive element. The inductive element and the capacitive element may be used for energy storage and energy supply. For example, the switch element in the bridgeless PFC circuit is an insulated gate bipolar transistor IGBT, a metal-oxide-semiconductor field-effect transistor MOSFET, a silicon carbide SiC transistor, or a gallium nitride GaN transistor.

For example, the sampled signal is optionally a voltage signal obtained by performing sampling by the sampling module based on a current signal.

For example, a current of the alternating current power supply module may come from an external power supply, for example, a mains supply.

For example, the current signal output by the power module to the sampling module is optionally output by an inductive element and/or a capacitive element in the power module to the sampling module.

According to the first aspect, the control module includes a first filtering unit, a lightning quick-break protection unit, a low frequency transistor switch control unit, and a current metering unit. The first filtering unit is connected to a first logic circuit, a second logic circuit, and a third logic circuit, and the first filtering unit is configured to filter the sampled signal. The lightning quick-break protection unit is connected to the first filtering unit by using the first logic circuit. The lightning quick-break protection unit is configured to switch off the switch element when the sampled signal includes the lightning surge signal. The low frequency transistor switch control unit is connected to the first filtering unit by using the second logic circuit. The second logic circuit includes a first signal amplification unit, where the first signal amplification unit amplifies a sampled signal obtained by filtering by the first filtering unit, and outputs an amplified sampled signal to the low frequency transistor switch control unit. The low frequency transistor switch control unit is configured to control on and off of the switch element based on the sampled signal obtained by amplifying by the first signal amplification unit. The current metering unit is connected to the first filtering unit by using the third logic circuit. The third logic circuit includes a second signal amplification unit and a second filtering unit. The second signal amplification unit amplifies the sampled signal obtained by filtering by the first filtering unit, and outputs an amplified sampled signal to the second filtering unit. The second filtering unit filters the sampled signal obtained by amplifying by the second signal amplification unit, and outputs a filtered sampled signal to the current metering unit. The current metering unit is configured to perform current metering on the sampled signal obtained by filtering by the second filtering unit. In this way, the control module in this application can measure a current while implementing lightning protection and switch control, and different functions are implemented without disposing a plurality of circuits, to effectively reducing an occupied area of the circuit.

According to the first aspect or any implementation of the first aspect, the first logic circuit includes a comparison unit. The comparison unit is configured to output indication information to the lightning quick-break protection unit when the sampled signal includes the lightning surge signal. The indication information indicates that the sampled signal includes the lightning surge signal. In this way, the lightning quick-break protection unit performs lightning protection on the switch element in the power supply module based on the indication information of the comparison unit, to prevent the switch element from being damaged.

For example, the comparison unit optionally includes a first comparator and a second comparator. A first threshold is set for the first comparator. The first threshold is used to indicate that a current flowing through the alternating current power supply is a reverse lightning current, and indicates the first comparator to output a high level to the lightning quick-break protection unit. The second comparator is configured to detect a current in a negative half cycle of an input current. A second threshold is set for the second comparator. The second threshold is used to indicate that a current flowing through the alternating current power supply is a reverse lightning current, and indicates the second comparator to output a high level to the lightning quick-break protection unit. The high level is optionally the indication information in this embodiment of this application. In this embodiment of this application, only an example in which the high level is output is used for description. This is not limited in this application.

According to the first aspect or any implementation of the first aspect, an amplification factor of the first signal amplification unit is greater than an amplification factor of the second signal amplification unit. In this way, in this embodiment of this application, the signal amplification units with different amplification factors can meet requirements of the low frequency transistor switch control for a large range and low precision, and meet requirements of the metering unit for a small range and high precision.

According to the first aspect or any implementation of the first aspect, the switch element includes a first switch element and a second switch element. The control module is specifically configured to: when the current signal is in a negative half cycle, if the sampled signal is greater than or equal to a first threshold, switch on the first switch element and switch off the second switch element, and if the sampled signal is less than the first threshold, switch off the first switch element, where the second switch element is in an off state, and when the current signal is in the negative half cycle, a current of the alternating current power supply flows from a negative electrode to a positive electrode; or when the current signal is in a positive half cycle, if the sampled signal is greater than or equal to a second threshold, switch on the second switch element and switch off the first switch element, and if the sampled signal is less than the second threshold, switch off the second switch element, where the first switch element is in an on state, an absolute value of the first threshold is equal to an absolute value of the second threshold, and when the current signal is in the positive half cycle, a current of the alternating current power supply flows from a positive electrode to a negative electrode. In this way, the control module can control, based on a direction and a magnitude of the current signal, on and off of the switch element in the power supply module, to implement zero voltage switch conduction of the first switch element and the second switch element, so as to reduce a turn-on loss and a turn-off loss of a power component.

According to the first aspect or any implementation of the first aspect, the control module further includes a protection unit. When a lightning surge signal flows into the power control circuit, a loop including the protection unit, the sampling apparatus, the switch element, and the alternating current power supply is conducted and the lightning surge signal is transmitted. In this way, the power control circuit may be provided with the protection unit, so that the lightning surge signal is transmitted in the loop including the protection unit, the sampling apparatus, the switch element, and the alternating current power supply, to prevent the lightning surge signal from flowing into the power module and causing damage to components such as an inductor in the power module and improve the reliability of the power control circuit.

According to the first aspect or any implementation of the first aspect, one terminal of the switch element is connected to the alternating current power supply, and the other terminal of the switch element is connected to the power module; and one terminal of the sampling module is connected to the alternating current power supply, and the other terminal of the sampling module is connected to the control module. In this way, the sampling module is disposed in the power control circuit in this application, so that the control module can implement, based on the sampled signal output by the sampling module, a plurality of functions such as lightning quick-break protection, switch control, and metering, to effectively reduce an occupied area of a PCB.

According to the first aspect or any implementation of the first aspect, the sampling module is a Hall effect sensor, a tunnel magnetoresistance TMR sensor, a resistor, or a current transformer CT.

According to the first aspect or any implementation of the first aspect, the control module includes a triangular current mode TCM controller, a continuous current mode CCM controller, or a critical mode CRM controller.

According to the first aspect or any implementation of the first aspect, the switch element is an IGBT, a MOSFET, a SiC transistor, or a GaN transistor.

According to the first aspect or any implementation of the first aspect, a measuring range of the sampling module is at least twice a rated measuring range. In this way, in this application, the large-range sampling module is disposed, so that a high current signal and a low current signal can be sampled. For example, a lightning current of up to 100 A can be detected, so that the sampling apparatus cannot be damaged when detecting the lightning current. The sampling apparatus can stably output a sampled signal, so that the control module 130 can obtain an accurate sampling result, and perform lightning quick-break protection based on the sampling result. In addition, the large-range sampling apparatus can take into account metering precision of a current within an input current amplitude while increasing a current detection range, thereby reducing an occupied area of a PCB.

According to a second aspect, an embodiment of this application provides a control method of a power control circuit. The power control circuit includes an alternating current power supply module, a power module, and a control module. The alternating current power supply module includes an alternating current power supply, a sampling module, and a switch element. The alternating current power supply provides electric energy for the power module. The power module includes a bridgeless power factor correction PFC circuit. The control method includes the following steps: The sampling module samples a current signal, and outputs an obtained sampled signal to the control module. The control module controls on and off of the switch element based on the sampled signal output by the sampling module, switches off the switch element when the sampled signal includes a lightning surge signal, and performs current metering on the sampled signal.

The second aspect and any implementation of the second aspect respectively correspond to the first aspect and any implementation of the first aspect. For technical effects corresponding to the second aspect or any implementation of the second aspect, refer to the technical effects corresponding to the first aspect or any implementation of the first aspect. Details are not described herein again.

According to a third aspect, an embodiment of this application provides a power control apparatus, including an input port, an output port, and the power control circuit for implementing the first aspect or any possible implementation of the first aspect. The input port is configured to: receive a current output by a power supply module, and transmit the current to the power control circuit. The output port is configured to transmit a current output by the power control circuit to a load device.

The third aspect and any implementation of the third aspect respectively correspond to the first aspect and any implementation of the first aspect. For technical effects corresponding to the third aspect or any implementation of the third aspect, refer to the technical effects corresponding to the first aspect or any implementation of the first aspect. Details are not described herein again.

According to a fourth aspect, an embodiment of this application provides a chip, including one or more interface circuits and one or more processors. The interface circuit is configured to: receive a signal from a memory, and send the signal to the processor, where the signal includes computer instructions stored in the memory. The interface circuit is further configured to receive a sampled signal output by a sampling module, where the sampled signal is obtained by the sampling module by sampling a current signal that is output by an alternating current power supply or a power module to the sampling module. The power module includes a bridgeless power factor correction PFC circuit. When the processor executes the computer instructions, the steps performed by the control module according to any one of claims 1 to 12 are performed.

According to a fifth aspect, an embodiment of this application provides a computer-readable medium, configured to store a computer program. The computer program is configured to perform the steps performed by the control module according to the first aspect or any possible implementation of the first aspect.

According to a sixth aspect, an embodiment of this application provides a computer program. The computer program is configured to perform the steps performed by the control module according to the first aspect or any possible implementation of the first aspect.

### BRIEF DESCRIPTION OF DRAWINGS

FIG. 1 shows an example of a schematic diagram of a structure of a power control circuit;
FIG. 2a shows an example of a schematic diagram of a structure of a power control circuit;
FIG. 2b shows an example of a schematic diagram of a structure of a power control circuit;
FIG. 3 shows an example of a schematic diagram of a structure of a control module;
FIG. 4 shows an example of a timing diagram;
FIG. 5a to FIG. 5d show examples of equivalent circuit diagrams;
FIG. 6a shows an example of a timing diagram;
FIG. 6b shows an example of a timing diagram;
FIG. 7a and FIG. 7b show examples of equivalent circuit diagrams;
FIG. 8 shows an example of a schematic diagram of signal processing;
FIG. 9 shows an example of a schematic diagram of a structure of a power control circuit; and
FIG. 10 shows an example of a schematic diagram of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

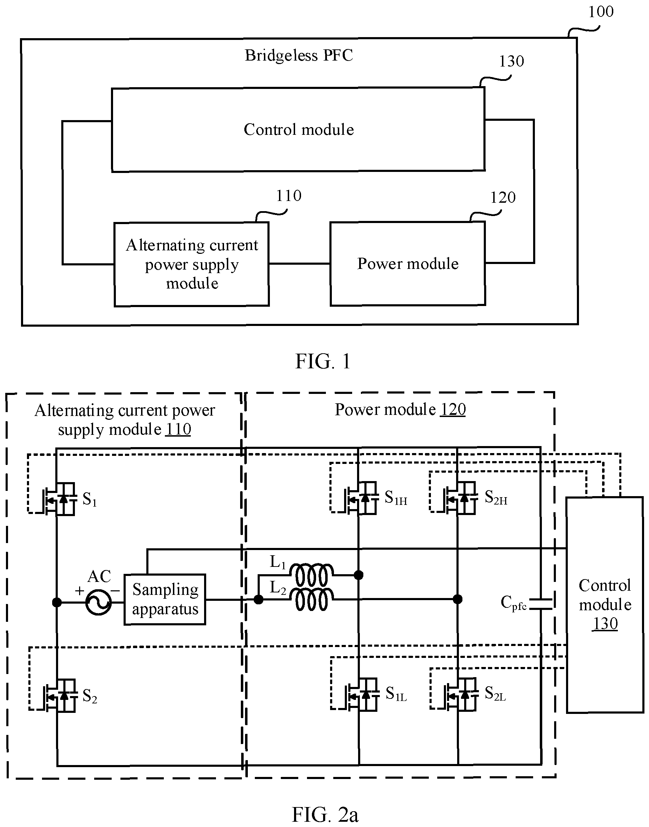

FIG. 1 shows an example of a schematic diagram of a structure of a power control circuit. As shown in FIG. 1, the power control circuit 100 includes an alternating current power supply module 110, a power module 120, and a control module 130. For example, the alternating current power supply module 110 is connected to the power module 120, and the alternating current power supply module 110 may be configured to function as the power module 120. The alternating current power supply module 110 includes an alternating current power supply, a first switch element, a second switch element, and/or a sampling apparatus.

The power module 120 includes a single-way bridgeless PFC circuit or a multi-way bridgeless PFC circuit. A PFC circuit of each way includes at least one inductive element, at least one capacitive element, and at least one pair of switch elements.

The control module 130 is connected to the alternating current power supply module 110 and the power module 120. The control module 130 may be configured to control, based on a sampled signal output by the sampling module in the alternating current power supply module 110 by sampling a current, on and off of the first switch element and the second switch element in the alternating current power supply module 110, to implement low frequency switch control on the first switch element and the second switch element. The control module 130 may be further configured to implement lightning quick-break protection of the first switch element and the second switch element based on the sampled signal output by the sampling module. In addition, the control module 130 may be further configured to perform current metering based on the sampled signal output by the sampling module.

In this embodiment of this application, the sampling apparatus is a large-range sampling apparatus, for example, a component such as a resistor, a current transformer (Current Transformer, CT), a Hall effect sensor, or a tunnel magnetoresistance (Tunnel Magnetoresistance, TMR) sensor. This is not limited in this application. In this embodiment of this application, to increase a current detection range, a measuring range of the large-range sampling apparatus may be at least twice a rated measuring range. For example, a lightning current of up to 100 A can be detected, so that the sampling apparatus cannot be damaged when detecting the lightning current. The sampling apparatus can stably output a sampled signal, so that the control module 130 can obtain an accurate sampling result, and perform lightning quick-break protection based on the sampling result. In addition, the large-range sampling apparatus can take into account metering precision of a current within an input current amplitude while increasing a current detection range, thereby reducing an occupied area of a PCB.

The following describes in detail the structure of the power control circuit in FIG. 1 with reference to FIG. 2a. As shown in FIG. 2a, for example, the alternating current power supply module 110 includes an alternating current power supply, a first switch element S₁, a second switch element S₂, and a sampling apparatus. It should be noted that, in this embodiment of this application, the first switch element may alternatively be S₂, and the second switch element may be S₁. This is not limited in this application.

As shown in FIG. 2a, for example, one terminal of the sampling apparatus is connected to the alternating current power supply, and the other terminal of the sampling apparatus is separately connected to the control module 130 and the power module 130. One terminal of S₁ is connected to the alternating current power supply, and the other terminal of S₁ is connected to the power module 120. Optionally, S₁ is connected to a switch element S_{1H} in the power module 120. One terminal of S₂ is connected to the alternating current power supply, and the other terminal of S₂ is connected to the power module 120. Optionally, S₂ is connected to a switch element S_{1L} in the power module 120. The sampling apparatus may sample a current signal, to obtain a sampled signal. Optionally, the signal collected by the sampling apparatus may include a current flowing through the sampling apparatus, and may further include another signal, for example, may include an electric field generated by the current. This is not limited in this application.

Still as shown in FIG. 2a, in this embodiment of this application, a two-way bridgeless PFC circuit is used as an example for description, and two bridge arms of the two-way bridgeless PFC circuit work at misphase of 180 degrees. A PFC circuit of one way in the power module 120 includes an inductive element Li, a pair of switch elements (including the switch elements S_{1H} and S_{1L}), and a capacitive element C_{pfc}. One terminal of L₁ is connected to the sampling apparatus, and the other terminal is connected to C_{pfc} by using S_{1H}, and is connected to C_{pfc} by using S_{1L}. A PFC circuit of the other way in the power module 120 includes an inductive element L₂, a pair of switch elements (including switch elements S_{2H} and S_{2L}), and the capacitive element C_{pfc}. One terminal of L₂ is connected to the sampling apparatus, and the other terminal is connected to C_{pfc} by using S_{2H}, and is connected to C_{pfc} by using S_{2L}.

For example, an input terminal of the control module 130 is connected to the sampling module, and is configured to receive a sampled signal output by the sampling module. The input terminal of the control module 130 may further be connected to gates of S_{1H}, S_{1L}, S_{2H}, S_{2L}, S₁, and S₂, to control on and off of each switch element. Optionally, a connection between the control module and each switch element is a signal connection.

For example, in this embodiment of this application, switch elements such as S_{1H}, S_{1L}, S_{2H}, S_{2L}, S₁, and S₂ may be insulated gate components, for example, an insulated gate bipolar transistor (Insulated Gate Bipolar Transistor, IGBT) or a metal-oxide-semiconductor field-effect transistor (Metal-Oxide-Semiconductor Field-Effect Transistor, MOSFET), or a silicon carbide SiC transistor or a gallium nitride GaN transistor. This is not limited in this application.

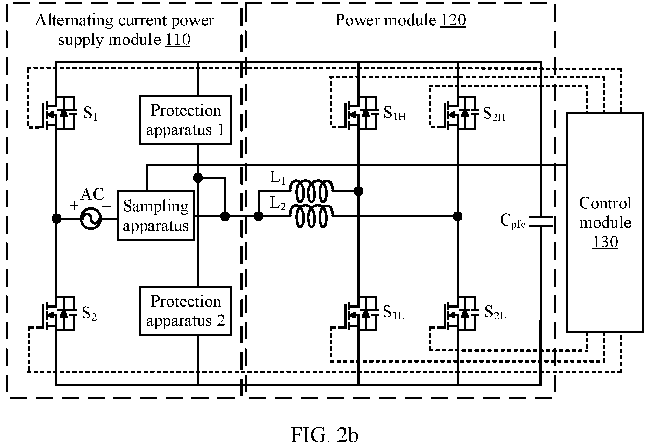

FIG. 2b shows an example of another power control circuit. As shown in FIG. 2b, for example, in addition to a sampling apparatus, a switch element, and a power supply, the alternating current power supply module 110 in FIG. 2b optionally further includes a protection apparatus 1 and a protection apparatus 2. For example, one terminal of the protection apparatus 1 is separately connected to S₁ and the power module 120, and the other terminal is separately connected to the protection apparatus 2 and the sampling apparatus. Optionally, the protection apparatus 1 is connected to a switch element S_{1H} in the power module 120. One terminal of the protection apparatus 2 is separately connected to S₂ and the power module 120, and the other terminal is separately connected to the protection apparatus 2 and the sampling apparatus. Optionally, the protection apparatus 2 is connected to the switch element S_{1L} in the power module 120. The protection apparatus 1 and the protection apparatus 2 can protect an inductive element in the power module from being damaged by a lightning current when the lightning current flows through. For another part that is not described, refer to the related description in FIG. 2a. Details are not described herein again.

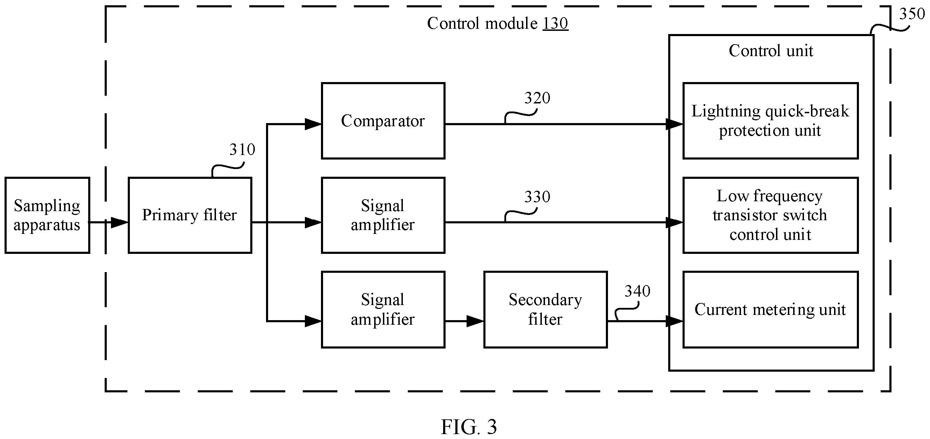

FIG. 3 shows an example of a schematic diagram of a structure of the control module 130. As shown in FIG. 3, the control module 130 includes but is not limited to a primary filter 310, a first logic circuit 320, a second logic circuit 330, a third logic circuit 340, and a control unit 350.

An input terminal of the primary filter 310 is connected to a sampling apparatus, and an output terminal of the primary filter is separately connected to the first logic circuit 320, the second logic circuit 330, and the third logic circuit 340. The large-range sampling apparatus samples a current signal, to obtain a voltage signal, namely, a sampled signal. It should be noted that the signal collected by the sampling apparatus may be a current signal flowing through the sampling apparatus, for example, may be a current signal input by a power supply to the sampling apparatus. Optionally, the collected signal may alternatively be an electromagnetic signal that does not flow through the sampling apparatus. This is not limited in this application.

The sampling apparatus outputs the sampled signal to the primary filter 310. The input terminal of the primary filter 310 receives the sampled signal, filters the sampled signal, and outputs a filtered sampled signal to the first logic circuit 320, the second logic circuit 330, and the third logic circuit 340.

For example, the first logic circuit 320 includes a comparison unit. In this embodiment of this application, an example in which the comparison unit is a comparator is used for description. In another embodiment, the comparison unit may alternatively be another component that can implement a function of the comparator in this embodiment of this application. This is not limited in this application. For example, one terminal of the comparator is connected to the primary filter 310, and the other terminal is connected to a lightning quick-break protection unit in the control unit 340. An input terminal of the comparator receives a signal input by the primary filter 310 (namely, the sampled signal processed by the primary filter 310). A threshold is set for the comparator, and the threshold is used to indicate that when a signal (namely, a voltage value) is greater than or equal to a threshold, a high level is output, and when a signal is less than the threshold, a low level is output. When the comparator detects that the signal input by the primary filter is greater than or equal to the threshold, the comparator outputs the high level to the lightning quick-break protection unit. When the comparator detects that the signal input by the primary filter is less than the threshold, the comparator outputs the low level to the lightning quick-break protection unit. The lightning quick-break protection unit may determine, based on the level input by the comparator, whether a signal flowing through the sampling apparatus is a lightning surge signal. For example, when the lightning quick-break protection unit receives a high level, it may be determined that the signal flowing through the sampling apparatus is a lightning surge signal. When the lightning quick-break protection unit receives a low level, it may be determined that the signal flowing through the sampling apparatus is not a lightning surge signal. For example, when the lightning quick-break protection unit determines that the signal flowing through the sampling apparatus (it may also be understood as flowing through a bridgeless PFC circuit) is the lightning surge signal, the lightning quick-break protection unit switches off a switch element that is currently in an on state and that is in S₁ and S₂, thereby implementing lightning quick-break protection and avoiding component damage caused by an excessive current. A specific implementation is described in detail in the following embodiment. It should be noted that, in this embodiment of this application, a manner in which the comparator indicates the lightning surge signal to the lightning quick-break protection unit is merely an example. Alternatively, the comparator may indicate a comparison result to the lightning quick-break protection unit in another manner. This is not limited in this application.

The second logic circuit 330 includes a signal amplifier. One terminal of the signal amplifier is connected to the primary filter 310, and the other terminal is connected to the low frequency transistor switch control unit in the control unit 340. The signal amplifier is configured to: amplify a signal input by the primary filter 310, and output an amplified signal to the low frequency transistor switch control unit. A first threshold and a second threshold are set for the low frequency transistor switch control unit. The first threshold is used to indicate to switch on the second switch element S₂ and switch off the first switch element S₁. The second threshold is used to indicate to switch on the first switch element S₁ and switch off the second switch element S₂. Certainly, in another embodiment, the first threshold may alternatively be used to indicate to switch on the first switch element S₁ and switch off the second switch element S₂. The second threshold is used to indicate to switch on the second switch element S₂ and switch off the first switch element S₁. This is not limited in this application. If the low frequency transistor switch control unit detects that the signal input by the signal amplifier is greater than or equal to the first threshold, the first switch element S₁ is switched on, and the second switch element S₂ is switched off. If the low frequency transistor switch control unit detects that the signal input by the signal amplifier is less than or equal to the second threshold, the second switch element S₂ is switched on, and the first switch element S₁ is switched off. If the low frequency transistor switch control unit detects that the signal input by the signal amplifier is less than the first threshold and greater than the second threshold, the first switch element S₁ or the second switch element S₂ that is in an on state is switched off. Therefore, zero voltage switch (Zero Voltage Switch, ZVS) conduction of the first switch element and the second switch element is implemented, to reduce a turn-on loss and a turn-off loss of a power component. It should be noted that, in this embodiment of this application, the first threshold and the second threshold of the low frequency transistor switch control unit may actually be understood as follows: The first threshold is a threshold corresponding to a negative half cycle of an input current, and the second threshold is a threshold corresponding to a positive half cycle of the input current. (Alternatively, the first threshold corresponds to the positive half cycle, and the second threshold corresponds to the negative half cycle. This is not limited in this application.) An absolute value of the first threshold is the same as that of the second threshold. For example, the first threshold is Vₜₕ₋, the second threshold is Vₜₕ₊, and absolute values of the first threshold and the second threshold are the same. The low frequency transistor switch control unit performs determining based on the first threshold in the negative half cycle of the input current. For example, when the sampled signal is greater than or equal to the first threshold (Vₜₕ₋), the first switch element S₁ is switched on, and the second switch element S₂ is switched off. When the sampled signal is less than the first threshold value (Vₜₕ₋), the first switch element S₁ is switched off. The low frequency transistor switch control unit performs determining based on the second threshold in the positive half cycle of the input current. For example, when the sampled signal is greater than or equal to the second threshold (Vₜₕ₊), the second switch element S₂ is switched on, and the first switch element S₁ is switched off. When the sampled signal is less than the second threshold value (Va,+), the second switch element S₁ is switched off. It should be noted that, in this embodiment of this application, the positive half cycle of the input current is optionally that a current of an alternating current power supply flows from a positive electrode to a negative electrode, and the negative half cycle is optionally that the current of the alternating current power supply flows from the negative electrode to the positive electrode.

For example, an amplification factor of the signal amplifier in the second logic circuit 330 is less than that of a signal amplifier in the third logic circuit 340. For example, a detection range of the low frequency transistor switch control is usually between 0 V and 3.3 V (namely, a rated working range), and the low frequency transistor switch control generally needs to meet a requirement for a large measuring range, and has a low requirement for precision, that is, the low frequency transistor switch control has requirements for a large measuring range and low precision. In this embodiment of this application, the large-range sampling apparatus is disposed, so that a signal that exceeds the rated measuring range can be detected, and then a signal amplifier with a smaller amplification factor amplifies the signal. Therefore, a peak voltage of a high current can fall within the detection range of the low frequency transistor switch control unit, to meet the requirements of the low frequency transistor switch control for the large measuring range and the low precision.

The third logic circuit 340 includes the signal amplifier and a secondary filter. One terminal of the signal amplifier is connected to the primary filter, and the other terminal is connected to the secondary filter. The signal amplifier is configured to: amplify a signal input by the primary filter 310, and output an amplified signal to the secondary filter. For example, as described above, the amplification factor of the signal amplifier in the third logic circuit 340 is high. Usually, a detection range of a current metering unit is 0 V to 3.3 V due to limitation of a control unit component (for example, a single-chip microcomputer) in which the current metering unit is located. In this embodiment of this application, the signal amplifier with a high amplification factor is used to amplify the signal, to effectively improve metering precision of the current metering unit, so as to meet requirements of the current metering for a small measuring range and high precision. It should be noted that, in this embodiment of this application, a specific value of the amplification factor of the signal amplifier may be set based on a requirement of a connected lower-level component, and may be set based on an actual requirement. This is not limited in this application. Still as shown in FIG. 3, for example, one terminal of the secondary filter is connected to the signal amplifier, and the other terminal is connected to a current metering unit in the control unit 350. The secondary filter is configured to: filter a signal input by the signal amplifier, to obtain a waveform closer to a sinusoidal waveform, and output a processed signal to the current metering unit. The current metering unit performs current metering on the signal inputted by the secondary filter.

For example, the control unit further includes a triangular current mode (Triangular Current Mode, TCM) controller, a continuous current mode (Continuous Current Mode, CCM) controller, or a critical mode (Critical Mode, CRM) controller. This is not limited in this application. In this embodiment of this application, an example in which the control unit 350 includes the TCM controller is used for description. The TCM controller may control each switch element in the power module 120 to be switched on or off, to implement ZVS of a one-way switch element, and reduce a turn-on loss and a turn-off loss of a power component.

For example, the control unit may include discrete components or be a logic device, for example, a complex programmable logic device (Complex Programmable Logic Device, CPLD) or a field-programmable gate array (Field-Programmable Gate Array, FPGA). Optionally, in this embodiment of this application, a "connection" in the control module is a "signal connection". For example, a connection between the first logic circuit and the lightning quick-break protection unit may be a signal connection.

For example, in this embodiment of this application, each filter may be a passive filter or an active filter. The passive filter may be an RC filter, and has a plurality of forms such as a first-order filter, a multi-order filter, and a pi-type filter. The active filter mainly uses an active component such as a signal amplifier, and performs signal filtering in combination with a resistance-capacitance parameter. The active filter has a plurality of forms such as a first-order filter, a multi-order filter, a pi-type filter, a Chebyshev filter, and a Butterworth filter. This is not limited in this application.

For example, the power control circuit in this embodiment of this application may be applied to a power control apparatus. Optionally, the power control apparatus may be an AC/DC (Alternating Current (alternating current)/Direct Current (direct current)) module. Alternatively, the power control apparatus may be a blade power supply or the like. This is not limited in this application. The power control apparatus includes an input port and an output port. The input port is configured to receive a current input by a power supply module. The current is optionally an alternating current, and the current may be from a mains supply. The power control circuit in the power control apparatus may process the received current based on the method in this embodiment of this application. In addition, the power control apparatus may output a current to a load device. The current output by the power control apparatus is a direct current.

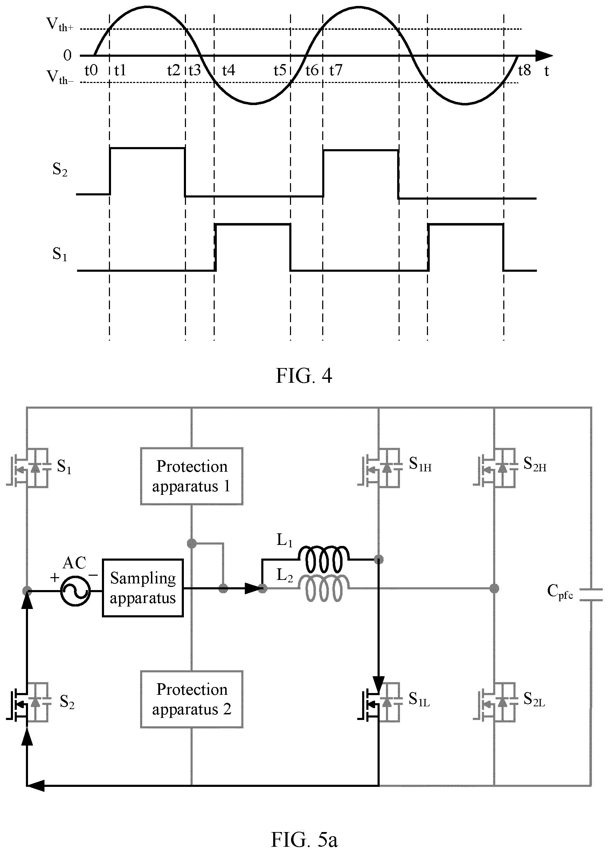

With reference to FIG. 3, the following describes in detail a control method of the bridgeless PFC circuit in this embodiment of this application. FIG. 4 shows an example of a timing diagram. As shown in FIG. 4, the alternating current power supply inputs a current signal to the sampling apparatus 310, where the current signal is a sinusoidal signal, and the alternating current power supply is left positive and right negative. The following first describes a low frequency transistor switch control solution. It should be noted that although low frequency transistor switch control, lightning quick-break protection, and current metering are separately described in the following, actually, three units in the control module work at the same time. Details are not described again in the following.

For example, after sampling the current signal, the sampling apparatus 310 outputs a sampled signal to the second logic circuit 330. After processing the sampled signal, the second logic circuit 330 outputs a signal to the low frequency transistor switch control unit. For example, as described above, the first threshold and the second threshold are set for the low frequency transistor switch control unit. In this embodiment of this application, as shown in FIG. 4, an example in which the first threshold is Van-, the second threshold is Vₜₕ₋, and each switch element is a MOSFET is used for description.

Still refer to FIG. 4. In a time period from t0 to t1, a value of a signal detected by the low frequency transistor switch control unit is less than the first threshold and greater than the second threshold, that is, less than Vₜₕ₊ and greater than Vₜₕ₋. Correspondingly, the MOSFET S2 and the MOSFET S1 are in an off state. In a time period from t1 to t2, a value of a signal detected by the low frequency transistor switch control unit is greater than or equal to the first threshold. Correspondingly, the low frequency transistor switch control unit outputs a high level to the MOSFET S2, to drive the MOSFET S2 to be switched on. For example, in the time period from t1 to t2, the low frequency transistor switch control unit controls the MOSFET S1 to remain in the off state.

Refer to an equivalent circuit diagram shown in FIG. 5a. For example, the MOSFET S1L in the power module 130 serves as a primary transistor. Within a switched-on time period of the MOSFET S2, a current loop sequentially passes through the sampling apparatus, the inductive element L1, the MOSFET S1L, and the MOSFET S2. In a time period from t2 to t4, a value of a signal detected by the low frequency transistor switch control unit is less than the first threshold and greater than the second threshold, that is, less than Vₜₕ₊ and greater than Vₜₕ₋. The low frequency transistor switch control unit outputs a low level to the MOSFET S2, to drive the MOSFET S2 to be switched off. For example, in the time period from t2 to t4, the low frequency transistor switch control unit controls the MOSFET S1 to remain in the off state.

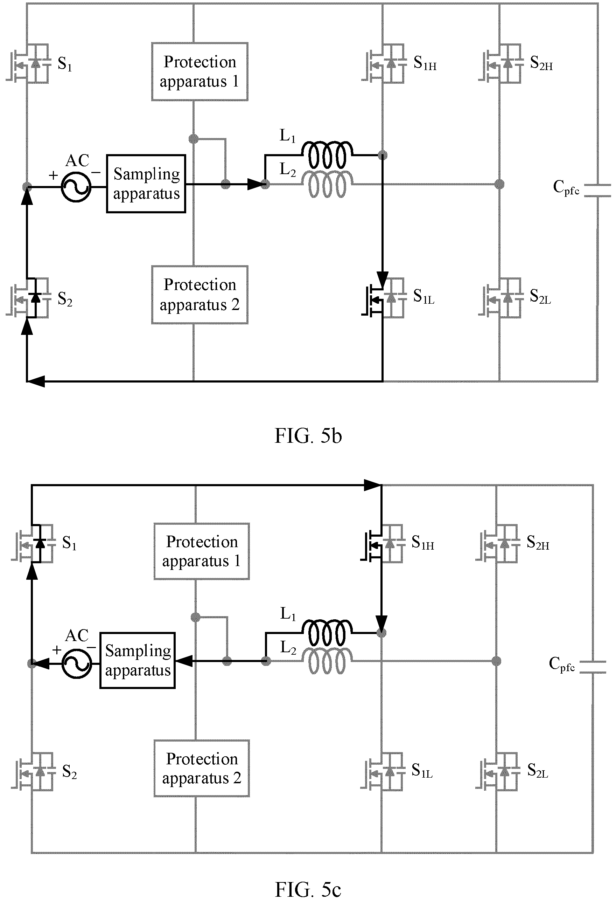

Refer to an equivalent circuit diagram in FIG. 5b. For example, within a switched-off time period of the MOSFET S2, in a time period from t2 to t3, a current loop sequentially passes through the sampling apparatus, the inductive element L1, the MOSFET S1L, and a body diode of the MOSFET S2. Due to a reverse recovery characteristic of the body diode of the MOSFET S2, a reverse recovery current exists. The reverse recovery current can pull through a body diode of the MOSFET S1, to implement zero voltage conduction of the MOSFET S2. Still refer to FIG. 5c. For example, in a time period from t3 to t4, that is, a negative half cycle of an alternating current input, a current loop sequentially passes through the body diode of the MOSFET S1, the MOSFET S1H, the inductive element L1, and the sampling apparatus.

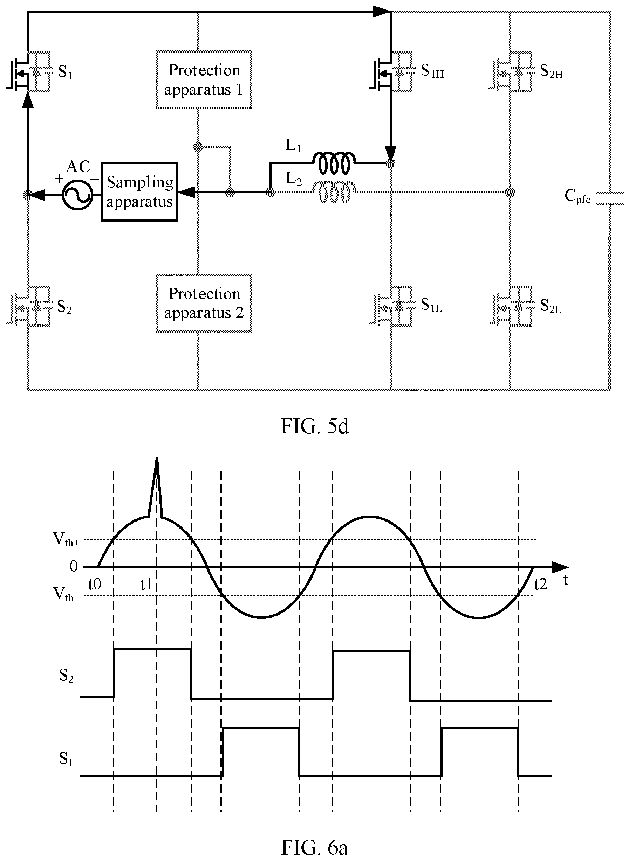

Still refer to FIG. 4. In a time period from t4 to t5, a value of a signal detected by the low frequency transistor switch control unit is less than or equal to the second threshold (that is, less than or equal to Vₜₕ₋). Correspondingly, the low frequency transistor switch control unit outputs a high level to the MOSFET S1, to drive the MOSFET S1 to be switched on. For example, in the time period from t4 to t5, the low frequency transistor switch control unit controls the MOSFET S2 to remain in the off state. Refer to an equivalent circuit diagram shown in FIG. 5d. For example, within a switched-on time period of the MOSFET S1, a current loop sequentially passes through the MOSFET S 1, the MOSFET S_{1H}, the inductive element L1, and the sampling apparatus. It should be noted that, in this embodiment of this application, only the loop in the power module 130 is used as an example. An actual path may follow an implementation of a TCM control method (which may be another control method such as CRM). For example, within the switched-on time period of the MOSFET S1, the current loop may be the MOSFET S1, the capacitive element Cpfc, the MOSFET S1L, the inductive element L1, and the sampling apparatus. Examples are not described one by one in this application.

Still refer to FIG. 4. For example, in a time period from t5 to t7, a value of a signal detected by the low frequency transistor switch control unit is less than the first threshold and greater than the second threshold, that is, less than Vₜₕ₊ and greater than Vₜₕ₋. The low frequency transistor switch control unit outputs a low level to the MOSFET S1, to drive the MOSFET S1 to be switched off. The low frequency transistor switch control unit controls the MOSFET S2 to remain in the off state. Correspondingly, in a time period from t5 to t6, a current loop passes through a body diode of the MOSFET S1, the MOSFET S1H, the inductive element L1, and the sampling apparatus. In a time period from t6 to t7, a current loop sequentially passes through the sampling apparatus, the inductive element L1, the MOSFET S1L, and the MOSFET S2. For a time period from t7 to t8, refer to a time period from t1 to t0. Details are not described herein again.

The following describes in detail a lightning quick-break protection solution. In this embodiment of this application, the comparator of the first logic circuit 320 includes a first comparator and/or a second comparator. The first comparator is configured to detect a current in a positive half cycle of an input current, and a first threshold is set for the first comparator. The first threshold is used to indicate that a current flowing through the alternating current power supply is a reverse lightning current, and indicates the first comparator to output a high level to the lightning quick-break protection unit. The second comparator is configured to detect a current in a negative half cycle of an input current. A second threshold is set for the second comparator. The second threshold is used to indicate that a current flowing through the alternating current power supply is a reverse lightning current, and indicates the second comparator to output a high level to the lightning quick-break protection unit. For example, in the positive half cycle of the input current, the first comparator determines, based on a comparison between the sampled signal input by the sampling apparatus and the first threshold, whether the current flowing through the alternating current power supply is the reverse lightning current. In an example, if the sampled signal is in reverse phase with an alternating current and exceeds the first threshold, a high level is output to the lightning quick-break protection unit. In another example, if the sampled signal is in phase with an alternating current, a low level is output to the lightning quick-break protection unit. For example, in the negative half cycle of the input current, the second comparator compares the sampled signal input by the sampling apparatus with the second threshold. In an example, if the sampled signal is in reverse phase with an alternating current and exceeds the second threshold, a high level is output to the lightning quick-break protection unit. In another example, if the sampled signal is in phase with an alternating current, a low level is output to the lightning quick-break protection unit. For example, if the lightning quick-break protection unit receives a low level, that is, determines that the current flowing through the alternating current power supply is not the reverse lightning current, the lightning current protection unit does not perform an action. If the lightning quick-break protection unit receives a high level input from the first comparator or the second comparator, the lightning quick-break protection unit may determine that the current flowing through the alternating current power supply is the reverse lightning current. The lightning quick-break protection unit switches off the MOSFET S2 or the MOSFET S1 that is currently in the on state, to avoid damage to the switch element.

The following describes in detail the lightning quick-break protection solution by using a specific example. FIG. 6a shows an example of a timing diagram. Refer to FIG. 6a. In a time period from t0 to t1, the MOSFET S2 is switched on, and the MOSFET S1 is switched off. For a specific implementation, refer to the description in FIG. 4. Details are not described herein again. It is assumed that at a moment t1, a lightning current in phase with an alternating current flows through the sampling apparatus, and after sampling the current, the sampling apparatus outputs a sampled signal to the first logic circuit 320. The first comparator of the first logic circuit 320 compares the sampled signal with the first threshold. For example, the sampled signal is in phase with the alternating current. Correspondingly, the first comparator outputs a low level to the lightning quick-break protection unit. In other words, when a direction of a lightning surge current is consistent with the direction of the alternating current, in-phase currents do not cause damage to a component, and the lightning quick-break protection apparatus may not perform quick-break protection, that is, processing is still performed according to the timing diagram in FIG. 4 in a time period from t1 to t2. It should be noted that, in FIG. 6a, a description is provided by only using a positive half cycle of the alternating current as an example. In another embodiment, if an in-phase lightning current flows in a negative half cycle, a processing manner of the lightning current is similar to that in the positive half cycle, that is, the second comparator compares the sampled signal, and outputs a low level to the lightning quick-break protection apparatus. This is not described herein again.

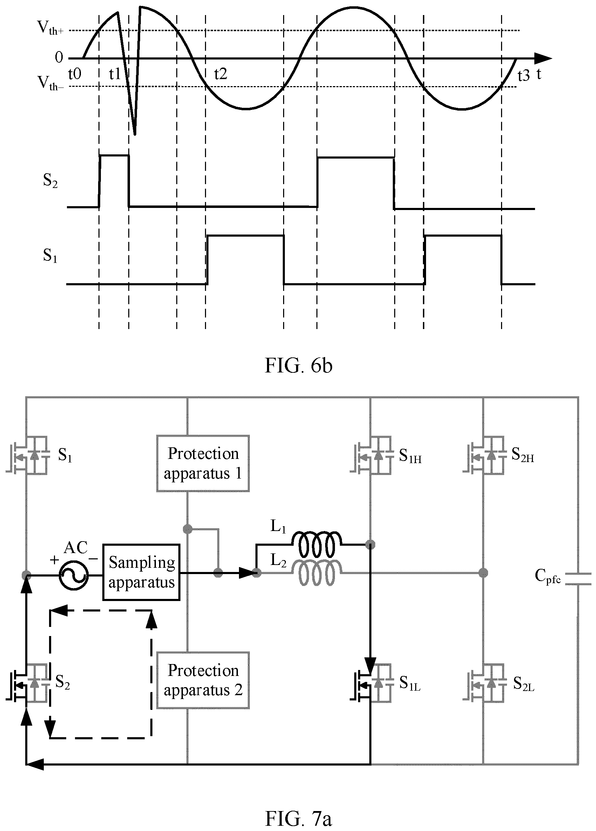

FIG. 6b shows an example of a timing diagram. In this example, an example in which a reverse lightning current flows in a positive half cycle is used for description. The reverse lightning current in the negative half cycle is similar to that in the positive half cycle. This is not described again in this application. Refer to FIG. 6b. For example, in a time period from t0 to t1, the MOSFET S2 is switched on, and the MOSFET S1 is switched off. For a specific implementation, refer to the description in FIG. 4. Details are not described herein again. It is assumed that at a moment t1, a lightning current in phase with an alternating current flows through the sampling apparatus, and after sampling the current, the sampling apparatus outputs a sampled signal to the first logic circuit 320. The first comparator of the first logic circuit 320 compares the sampled signal with the first threshold. For example, the sampled signal is in reverse phase with the alternating current. Correspondingly, the first comparator outputs a high level to the lightning quick-break protection unit. In response to the received high level, the lightning quick-break protection unit switches off the MOSFET S2 in the on state.

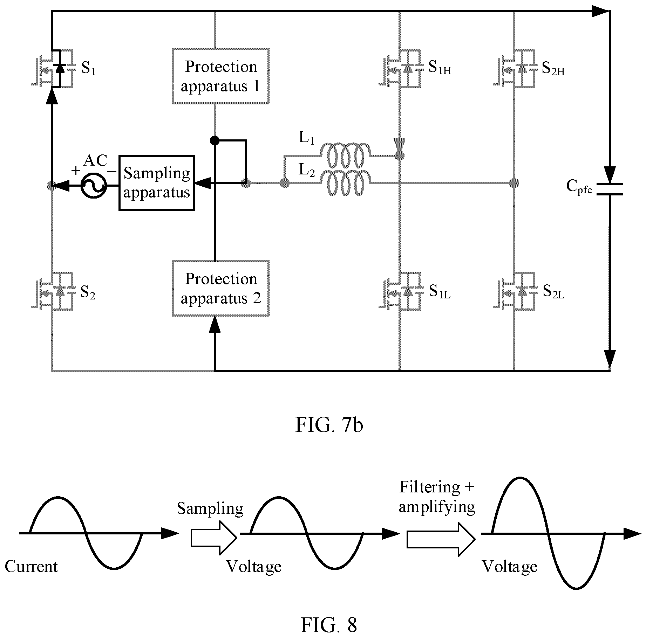

For example, refer to FIG. 7a. In a time period from t0 to t1, a current loop passes through the sampling apparatus, the inductive element L1, the MOSFET S1L, and the MOSFET S2. A current is left negative and right positive. When a reverse lightning surge signal flows through a circuit (which may also be referred to as lightning current backflow), a current loop passes through the MOSFET S2, the protection apparatus 2, and the sampling apparatus, which may cause damage to the MOSFET S2. Still refer to FIG. 6b. In this embodiment of this application, at a moment t1, the lightning quick-break unit controls the MOSFET S2 to be switched off, and the MOSFET S1 is also in the off state. Refer to FIG. 7b. For example, at a moment t1, after the MOSFET S2 is switched off, a current loop passes through the body diode of the MOSFET S2, the capacitive element Cpfc, the protection apparatus 2, and the sampling apparatus, to protect the inductive element and the switch element from being damaged. Still refer to FIG. 6b. In a time period from t1 to t2, the MOSFET S2 and the MOSFET S1 are in the off state. At a moment t2, the low frequency transistor switch control unit detects that the second threshold is satisfied (that is, less than or equal to Vₜₕ₋). The low frequency transistor switch control unit controls the MOSFET S1 to be switched on. For a specific implementation after the moment t2, refer to the related description in FIG. 4. Details are not described herein again.

The following describes in detail a current metering solution in this embodiment of this application. Refer to FIG. 8. For example, the sampling apparatus samples a current signal, to obtain a sampled signal (namely, a voltage signal). After being amplified by the primary amplifier 310, the sampled signal is amplified by the signal amplifier of the third logic circuit 340, filtered by the secondary filter, and output to the current metering unit. A signal amplifier with a high amplification factor amplifies the signal, to effectively improve metering precision of the current metering unit, so as to meet requirements of the current metering for a small range and high precision.

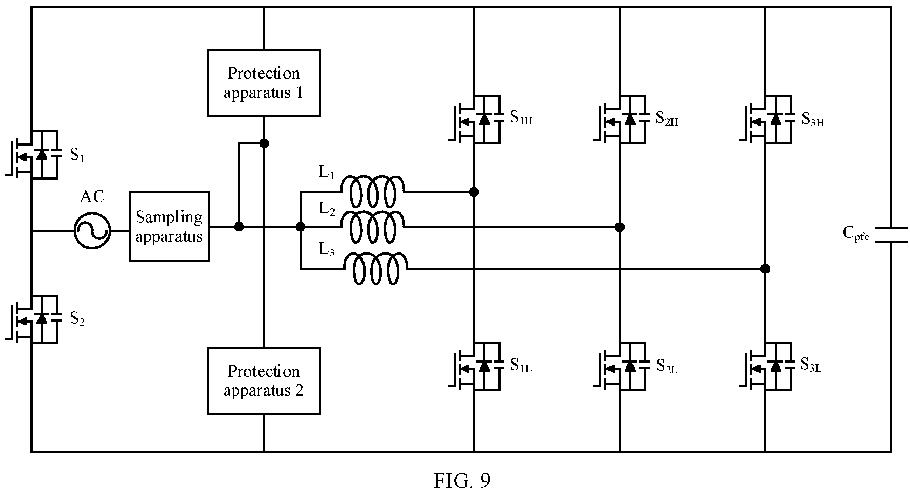

It should be noted that, in this embodiment of this application, only a two-way bridgeless PFC circuit is used as an example for description. In another embodiment, the solution in this embodiment of this application may be further applied to a single-way bridgeless PFC circuit and a bridgeless PFC circuit with at least two ways. For example, in a three-way bridgeless PFC circuit shown in FIG. 9, three bridge arms of the three-way bridgeless PFC circuit work at misphase of 120 degrees.

It may be understood that, to implement the foregoing functions, an electronic device includes corresponding hardware and/or software modules for performing the functions. With reference to algorithm steps in the examples described in embodiments disclosed in this specification, this application can be implemented in a form of hardware or a combination of hardware and computer software.

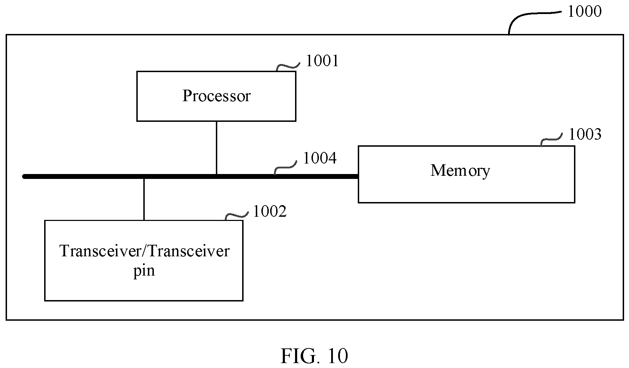

In an example, FIG. 10 is a schematic block diagram of an apparatus 1000 according to an embodiment of this application. The apparatus 1000 may include a processor 1001 and a transceiver/transceiver pin 1002. Optionally, the apparatus 1000 further includes a memory 1003.

Components of the apparatus 1000 are coupled together through a bus 1004. In addition to a data bus, the bus 1004 further includes a power bus, a control bus, and a status signal bus. However, for clear description, various buses are referred to as the bus 1004 in the figure.

Optionally, the memory 1003 may be configured to store instructions for the foregoing method embodiment. The processor 1001 may be configured to execute the instructions in the memory 1003, control a receiving pin to receive a signal, and control a sending pin to send a signal. For example, the receiving pin may receive a sampled signal output by a sampling apparatus. The sending pin may be configured to send a control signal, to control on and off of a switch element.

The apparatus 1000 may be the control module in the foregoing method embodiment or a chip in which the control module is located.

All related content of the steps in the foregoing method embodiment may be cited in function descriptions of corresponding functional modules. Details are not described herein again.

An embodiment further provides a computer storage medium. The computer storage medium stores computer instructions. When the computer instructions are run on an electronic device, the electronic device is enabled to perform the foregoing related method steps, to implement the method in the foregoing embodiment.

An embodiment further provides a computer program product. When the computer program product runs on a computer, the computer is enabled to perform the foregoing related steps, to implement the method in the foregoing embodiment.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object and a second target object are used to distinguish between different target objects, but are not used to describe a particular order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the description of the embodiment of this application, unless otherwise stated, "a plurality of" means two or more than two. For example, a plurality of processing units mean two or more processing units; and a plurality of systems mean two or more systems.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A power control circuit, comprising an alternating current power supply module, a power module, and a control module, wherein
the alternating current power supply module comprises an alternating current power supply, a sampling module, and a switch element, wherein the alternating current power supply provides electric energy for the power module, and the sampling module samples a current signal output by the alternating current power supply or the power module to the sampling module, and outputs an obtained sampled signal to the control module;
the power module comprises a bridgeless power factor correction PFC circuit; and
the control module controls on and off of the switch element based on the sampled signal output by the sampling module, switches off the switch element when the sampled signal comprises a lightning surge signal, and performs current metering on the sampled signal.

2. The circuit according to claim 1, wherein the control module comprises:
a first filtering unit, wherein the first filtering unit is connected to a first logic circuit, a second logic circuit, and a third logic circuit, and the first filtering unit filters the sampled signal;
a lightning quick-break protection unit, wherein the lightning quick-break protection unit is connected to the first filtering unit by using the first logic circuit, and the lightning quick-break protection unit switches off the switch element when the sampled signal comprises the lightning surge signal;
a low frequency transistor switch control unit, wherein the low frequency transistor switch control unit is connected to the first filtering unit by using the second logic circuit, the second logic circuit comprises a first signal amplification unit, the first signal amplification unit amplifies a sampled signal obtained by filtering by the first filtering unit, and outputs an amplified sampled signal to the low frequency transistor switch control unit, and the low frequency transistor switch control unit is configured to control on and off of the switch element based on the sampled signal obtained by amplifying by the first signal amplification unit; and
a current metering unit, wherein the current metering unit is connected to the first filtering unit by using the third logic circuit, the third logic circuit comprises a second signal amplification unit and a second filtering unit, the second signal amplification unit amplifies the sampled signal obtained by filtering by the first filtering unit, and outputs an amplified sampled signal to the second filtering unit, the second filtering unit filters the sampled signal obtained by amplifying by the second signal amplification unit, and outputs a filtered sampled signal to the current metering unit, and the current metering unit is configured to perform current metering on the sampled signal obtained by filtering by the second filtering unit.

3. The circuit according to claim 2, wherein the first logic circuit comprises a comparison unit, the comparison unit is configured to output indication information to the lightning quick-break protection unit when the sampled signal comprises the lightning surge signal, and the indication information indicates that the sampled signal comprises the lightning surge signal.

4. The circuit according to claim 2, wherein an amplification factor of the first signal amplification unit is greater than an amplification rate of the second signal amplification unit.

5. The circuit according to claim 1, wherein the switch element comprises a first switch element and a second switch element; and the control module is specifically configured to:
when the current signal is in a negative half cycle, if the sampled signal is greater than or equal to a first threshold, switch on the first switch element and switch off the second switch element, and if the sampled signal is less than the first threshold, switch off the first switch element, wherein the second switch element is in an off state, and when the current signal is in the negative half cycle, a current of the alternating current power supply flows from a negative electrode to a positive electrode; or
when the current signal is in a positive half cycle, if the sampled signal is greater than or equal to a second threshold, switch on the second switch element and switch off the first switch element, and if the sampled signal is less than the second threshold, switch off the second switch element, wherein the first switch element is in an on state, an absolute value of the first threshold is equal to an absolute value of the second threshold, and when the current signal is in the positive half cycle, a current of the alternating current power supply flows from a positive electrode to a negative electrode.

6. The circuit according to claim 1, wherein the control module further comprises a protection unit, and when a lightning surge signal flows into the power control circuit, a loop comprising the protection unit, the sampling apparatus, the switch element, and the alternating current power supply is conducted and the lightning surge signal is transmitted.

7. The circuit according to claim 1, wherein one terminal of the switch element is connected to the alternating current power supply, and the other terminal of the switch element is connected to the power module; and one terminal of the sampling module is connected to the alternating current power supply, and the other terminal of the sampling module is connected to the control module.

8. The circuit according to claim 1, wherein the sampling module is a Hall effect sensor, a tunnel magnetoresistance TMR sensor, a resistor, or a current transformer CT.

9. The circuit according to claim 1, wherein the control module comprises a triangular current mode TCM controller, a continuous current mode CCM controller, or a critical mode CRM controller.

10. The circuit according to claim 1, wherein the switch element is an IGBT, a MOSFET, a SiC transistor, or a GaN transistor.

11. The circuit according to claim 1, wherein a measuring range of the sampling module is at least twice a rated measuring range.

12. A control method of a power control circuit, wherein the power control circuit comprises an alternating current power supply module, a power module, and a control module, the alternating current power supply module comprises an alternating current power supply, a sampling module, and a switch element, the alternating current power supply provides electric energy for the power module, and the power module comprises a bridgeless power factor correction PFC circuit; and the method comprises:
sampling, by the sampling module, a current signal, and outputting an obtained sampled signal to the control module; and
controlling, by the control module, on and off of the switch element based on the sampled signal output by the sampling module, switching off the switch element when the sampled signal comprises a lightning surge signal, and performing current metering on the sampled signal.

13. A power control apparatus, comprising an input port, an output port, and the power control circuit according to any one of claims 1 to 11, wherein
the input port is configured to: receive a current output by a power supply module, and transmit the current to the power control circuit; and
the output port is configured to transmit a current output by the power control circuit to a load device.

14. A chip, comprising:
one or more interface circuits and one or more processors, wherein
the interface circuit is configured to: receive a signal from a memory, and send the signal to the processor, wherein the signal comprises computer instructions stored in the memory;
the interface circuit is further configured to receive a sampled signal output by a sampling module, wherein the sampled signal is obtained by the sampling module by sampling a current signal that is output by an alternating current power supply or a power module to the sampling module, and the power module comprises a bridgeless power factor correction PFC circuit; and
when the processor executes the computer instructions, the steps performed by the control module according to any one of claims 1 to 11 are performed.
